(19)

Europäisches Patentamt
European Patent Office
Office européen des brevets

(11) EP 4 588 903 A1

(12) **EUROPEAN PATENT APPLICATION**
published in accordance with Art. 153(4) EPC

(43) Date of publication:
**23.07.2025 Bulletin 2025/30**

(21) Application number: **24850465.6**

(22) Date of filing: **27.02.2024**

(51) International Patent Classification (IPC):
**C04B 11/032** (2006.01)

(86) International application number:
**PCT/CN2024/078787**

(87) International publication number:
**WO 2025/030805 (13.02.2025 Gazette 2025/07)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **04.02.2024 CN 202410156820**

(71) Applicant: **CNBM Design & Research Institute Co., Ltd.**
**Hangzhou, Zhejiang 310022 (CN)**

(72) Inventors:
• **XIE, Xiaoning**
**Hangzhou, Zhejiang 310022 (CN)**

• **REN, Zhiwei**
**Hangzhou, Zhejiang 310022 (CN)**
• **ZHENG, Fangwei**
**Hangzhou, Zhejiang 310022 (CN)**
• **ZHU, Jipan**
**Hangzhou, Zhejiang 310022 (CN)**
• **YU, Pan**
**Hangzhou, Zhejiang 310022 (CN)**
• **WANG, Xiaoran**
**Hangzhou, Zhejiang 310022 (CN)**
• **ZHANG, Wei**
**Hangzhou, Zhejiang 310022 (CN)**

(74) Representative: **Cabinet Chaillot**
**16/20, avenue de l'Agent Sarre**
**B.P. 74**
**92703 Colombes Cedex (FR)**

(54) **CONTROL METHOD FOR ENERGY-SAVING FLUIDIZATION FURNACE FOR CALCINING GYPSUM WITH ULTRALOW-PRESSURE STEAM**

(57)    The present disclosure relates to the field of fluidized-bed furnace technology and discloses a control method for an energy-saving ultra-low pressure steam calcined gypsum fluidized-bed furnace. The control method includes: Step S1: switching on a fluidized-bed furnace steam inlet valve to preheat a fluidized-bed furnace system; Step S2: turning on a dust collecting fan, a dust collector, and a Roots blower; Step S3: turning on a raw material feeding system; and Step S4: feeding a raw material into the furnace, controlling the system to first enter a manual operation system, where a height of feed layer also gradually increases as feeding amount gradually increases, and gradually increasing a furnace bottom pressure from ordinary pressure to about 20 kPa. A temperature control system may be switched into automatic control after material temperature inside the furnace is stabilized. Steam temperature is adjusted through a bypass cold water valve, such that the steam temperature at a control position is within $\pm 2°C$ of saturated steam temperature, to ensure sufficient calcination time of the material and guarantee quality of the gypsum.

FIG. 1

EP 4 588 903 A1

## Description

### CROSSREFERENCE TO RELATED APPLICATION

This application claims priority to Chinese Patent Application No. titled "**CONTROL METHOD FOR ENERGY-SAVING ULTRA-LOW PRESSURE STEAM CALCINED GYPSUM FLUIDIZED-BED FURNACE**" and filed to the State Patent Intellectual Property Office on, the entire contents of which are incorporated herein by reference.

### TECHNICAL FIELD

The present disclosure relates to the field of fluidized-bed furnace technology, and more particular, to a control method for an energy-saving ultra-low pressure steam calcined gypsum fluidized-bed furnace.

### BACKGROUND

Steam is a zero-emission clean energy source, and heat sources for desulfurization gypsum come from power plants, which have a large amount of steam resources. However, currently, production of building gypsum mostly uses medium pressure steam with a pressure of 1.2 MPa or above as the heat sources. A large amount of surplus low-pressure superheated steam (less than 0.8 MPa) in the power plants cannot be utilized, resulting in energy waste. Therefore, fully utilizing the energy of the low-pressure superheated steam not only meets requirements of green economy and carbon peaking and carbon neutrality goals, but also generates better economic and social benefits.

Difficulty of using the low-pressure steam in the production process of the building gypsum is to complete development & design of an application model for ultra-low pressure superheated steam building gypsum calcination equipment with a pressure $\leq 0.6$MPa (250°C) and a production capacity greater than 40t/h.

A core issue in preparation of the building gypsum is calcination, which is accompanied by transformation of a three-phase crystal structure, that is, the transformation from $CaSO_4 \cdot 2H_2O$ to $CaSO_4 \cdot 0.5H_2O$. However, it cannot be guaranteed that all of dihydrate gypsum is transformed into hemihydrate gypsum. Residue of the dihydrate gypsum and production of anhydrous gypsum have always been a problem in the entire calcination process, but increase in composition thereof may reduce quality of the building gypsum.

Therefore, how to control temperature and time of the calcination and minimize the production of the anhydrous gypsum and the dihydrate gypsum as much as possible is the core issue in the entire calcination process of the building gypsum. In response to the above problems, the present disclosure is proposed.

## SUMMARY

Objectives of the present disclosure are to provide a control method for an energy-saving ultra-low pressure steam calcined gypsum fluidized-bed furnace, which can minimize production of anhydrous gypsum and dihydrate gypsum during calcination process and improve quality of building gypsum.

The present disclosure is implemented through the following technical solutions.

The control method for the energy-saving ultra-low pressure steam calcined gypsum fluidized-bed furnace of the present disclosure includes following steps:

Step S1: switching on a fluidized-bed furnace steam inlet valve M to preheat a fluidized-bed furnace system;

Step S2: turning on a dust collecting fan, a dust collector, and a Roots blower;

Step S3: turning on a raw material feeding system; and

Step S4: feeding a raw material into the furnace, controlling the system to first enter a manual operation system, where a height of feed layer also gradually increases as feeding amount gradually increases, and gradually increasing a furnace bottom pressure from ordinary pressure to 20 kPa or 20 kPa $\pm 2$ kPa. A temperature control system may be switched into automatic control after material temperature inside the furnace is stabilized.

An automatic control logic includes:

linking up opening of a superheated steam flow valve M1 with discharge temperature T8 by means of a control model for a linear equation in one unknown, the control model being:

$$Ma = \left( K1 * \frac{Ta}{Tn} + (1 - K1) \right) * Mn$$
; where

Ta represents the controlled discharge temperature T8;

Tn represents a maximum discharge temperature;

K1 represents a correction coefficient; and

Mn represents opening corresponding to the maximum discharge temperature Tn; and

adjusting superheated steam temperature T1 through a bypass cold water valve M2, and comparing the superheated steam temperature T1 with control position temperature T3 to ensure that steam temperature T3 at a control position is within $\pm 2$°C of saturated steam temperature during stable feeding.

Further, in the Step S1, preheating duration is at least one hour.

Further, in the Step S2, a gas system is turned on in order of turning on a dust removal fan, a dust remover, and the Roots blower.

Further, a value of Tn is 163 °C.

Further, a value of Mn is 100%.

Further, the automatic control logic also includes: carrying out interlocking control on pressure of P4 to P7 and frequency of the Roots blower during air intake, such that the pressure is within a control range and a height of feed layer is guaranteed.

Further, the automatic control logic also includes: adjusting a regulating valve of an exhaust fan to maintain furnace top pressure P8 at a negative micropressure of -100 Pa, and a value of P8 is linked to frequency of the dust collecting fan.

Further, in the Step S4, feeding of material is paused when material temperature inside the furnace does not reach a specified temperature, and feeding of the material is resumed when the material temperature rises to the specified temperature.

The present disclosure has following beneficial effects.

Steam temperature is controlled through a bypass cold water valve, such that the steam temperature at a control position is within ±2°C of saturated steam temperature, to ensure sufficient calcination time of the material and guarantee quality of the gypsum.

## BRIEF DESCRIPTION OF THE DRAWINGS

To describe the technical solutions in the embodiments of the present disclosure or those of the prior art more clearly, the accompanying drawings required for describing the embodiments or the prior art will be briefly introduced below. Apparently, the accompanying drawings in the following description are merely some embodiments of the present disclosure. To those of ordinary skills in the art, other accompanying drawings may also be derived from these accompanying drawings without creative efforts.

The present disclosure is further described below with reference to the accompanying drawings and the embodiments.

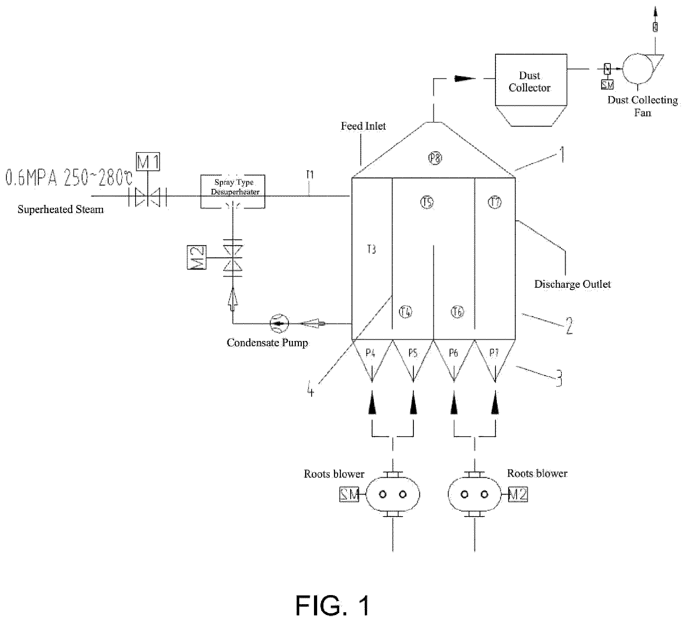

FIG. 1 is a schematic diagram of an overall structure of an energy-saving ultra-low pressure steam calcined gypsum fluidized-bed furnace.

## DETAILED DESCRIPTION

The present disclosure is described in detail below with reference to FIG. 1.

An energy-saving ultra-low pressure steam calcined gypsum fluidized-bed furnace, as shown in FIG. 1, is generally divided into three parts: a gas-collecting hood 1, a furnace body 2, and an air inlet box 3. One side of the gas-collecting hood is provided with a feed inlet, and a top thereof is provided with a dust collection port. The furnace body is internally provided with three partition boards 4 to divide it into four chambers. The furnace is internally provided with heat exchange tubes, which are arranged vertically. Each row of the heat exchange tubes are connected to manifolds, the manifolds are gathered on main steam inlet pipes and main water drain pipes, where four main steam inlet pipes and four main water drain pipes are provided, respectively. The heat exchange tubes are supported on a pipe carrier of a furnace wall through the manifolds.

Functions of equipment: the furnace is used for calcination of building gypsum, and uses steam as a heat source to calcine desulfurization gypsum into the building gypsum. Basic principles are as below. The desulfurization gypsum is fed into the furnace from the feed inlet, and fluidized air enters the furnace from a bottom through an air distribution plate by means of the air inlet box. Under the action of the fluidized air, the material is in a fluidized state in the furnace. After exchanging heat with the steam in the heat exchange tubes, water of crystallization is dehydrated, such that the desulfurization gypsum is converted into the building gypsum, which flows out of a discharge outlet. Water vapor generated during the calcination is extracted from an upper air-collecting hood by a fan.

Steps for controlling calcination of the gypsum are as follows.

(1) A fluidized-bed furnace steam inlet valve is switched on to preheat a fluidized-bed furnace system for one hour.

(2) A gas system is started in the order of turning on a dust collecting fan, a dust collector, and a Roots blower, to ensure stable airflow in a positive flow field. When the gas system is shut down, the dust collecting fan, the dust collector, and the Roots blower are turned off in reverse order.

(3) A raw material feeding system is turned on to maintain normal operation.

(4) A raw material is fed into the furnace, the system is controlled to first enter a manual operation system, where a height of feed layer also gradually increases as feeding amount gradually increases, and a furnace bottom pressure is gradually increased from ordinary pressure to about 20 kPa. In this case, feeding of the material is paused when material temperature inside the furnace does not reach a specified temperature, and feeding of the material is resumed when the material temperature rises to the specified temperature. A temperature control system may be switched into automatic control after the material temperature inside the furnace is stabilized.

An automatic control logic includes:

a) adjusting a regulating valve of an exhaust fan to maintain furnace top pressure P8 at a negative micro-pressure of -100 Pa, where a value of P8 is linked to frequency of the dust collecting fan.

b) linking up opening of a superheated steam flow valve M1 with discharge temperature T8 by means of a control model for a linear equation in one unknown under a given rated feed rate, the control model being:

$$Ma = \left(K1 * \frac{Ta}{Tn} + (1 - K1)\right) * Mn$$ ; where

Ta represents the controlled discharge temperature T8, which fluctuates within the range of 150-163 °C in theory;

Tn represents a maximum discharge temperature, which typically is 163 °C;

K1 represents a correction coefficient ranging from 0.5 to 0.8, and a final value thereof is determined according to site commissioning; and

Mn represents opening corresponding to the maximum discharge temperature Tn and typically is 100%.

This step can ensure that the discharge temperature is within the set range, ensure real-time automatic adjustment of steam supply, and thus ensure processing effects of the material.

c) Adjusting superheated steam temperature T1 through a bypass cold water valve M2, and comparing the superheated steam temperature T1 with saturated steam temperature T3 at a control position of 0.6 Mpa to ensure that the steam temperature T3 at the control position is within ±2°C of the saturated steam temperature during stable feeding, where the control position is located near the feed inlet. Specifically, as shown in FIG. 1, condensed water generated by the equipment is utilized and is pressurized into a high-temperature superheated steam pipeline by means of a condensate pump. The temperature of the high-temperature superheated steam is adjusted by means of a spray type desuperheater, and the opening of the valve M2 is controlled by means of a PLC or other microcontrollers to cool the temperature of the superheated steam from T1 250-280 °C to T3 159 °C.

The heat source is the superheated steam at the pressure of 0.6 Mpa and temperature of 250 °C, and indirect heat exchange is carried out between the superheated steam and the material through the pipeline in the furnace body. In an initial stage, which is from a superheated section at the pressure of 0.6 Mpa to a saturated steam section at the temperature of 159 °C, heat exchange efficiency is lower, so no condensate water is generated during this stage. To ensure sufficient heat exchange area for phase-change heat transfer of the saturated steam at a rear end, it is required to control it to a saturation temperature point.

d) Carrying out interlocking control on pressure of P4 to P7 and frequency of the Roots blower during air intake, such that the pressure is within a control range and a height of feed layer is guaranteed.

Steam temperature is controlled through a bypass cold water valve, such that the steam temperature at a control position is within ±2 °C of the saturated steam temperature, to ensure sufficient calcination time of the material and guarantee quality of the gypsum.

The above embodiments are only for illustrating technical concepts and characteristics of the present disclosure, and their purposes are to enable those skilled in the art to understand and implement the contents of the present disclosure, and cannot limit the scope of protection of the present disclosure. Any equivalent changes or modifications made in accordance with the spirit and essence of the present disclosure shall be covered within the scope of protection of the present disclosure.

## Claims

1. A control method for an energy-saving ultra-low pressure steam calcined gypsum fluidized-bed furnace comprising:

   Step S1: switching on a fluidized-bed furnace steam inlet valve to preheat a fluidized-bed furnace system;
   Step S2: turning on a dust collecting fan, a dust collector, and a Roots blower;
   Step S3: turning on a raw material feeding system; and
   Step S4: feeding a raw material into the furnace, gradually increasing a furnace bottom pressure from ordinary pressure to at least 20 kPa, and switching a temperature control system into automatic control after material temperature inside the furnace is stabilized;
   an automatic control logic comprising:

   linking up opening of a superheated steam flow valve M1 with discharge temperature T8 by means of a control model for a linear equation in one unknown, the control model being:

   $$Ma = \left(K1 * \frac{Ta}{Tn} + (1 - K1)\right) * Mn$$

   ; wherein
   Ta represents the controlled discharge temperature T8;
   Tn represents a maximum discharge temperature;
   K1 represents a correction coefficient; and
   Mn represents opening corresponding to the maximum discharge temperature Tn; and
   adjusting superheated steam temperature T1 through a bypass cold water valve M2, and comparing the superheated steam temperature T1 with control position temperature T3 to ensure that steam temperature T3 at a control position is within ±2°C of saturated steam temperature during stable feeding.

2. The control method for the energy-saving ultra-low pressure steam calcined gypsum fluidized-bed furnace according to claim 1, wherein in the Step S1, preheating duration is at least one hour.

3. The control method for the energy-saving ultra-low pressure steam calcined gypsum fluidized-bed furnace according to claim 1, wherein in the Step S2, a gas system is turned on in order of turning on a dust removal fan, the dust collector, and the Roots blower.

4. The control method for the energy-saving ultra-low pressure steam calcined gypsum fluidized-bed furnace according to claim 1, wherein a value of Tn is 163°C.

5. The control method for the energy-saving ultra-low pressure steam calcined gypsum fluidized-bed furnace according to claim 4, wherein a value of Mn is 100%.

6. The control method for the energy-saving ultra-low pressure steam calcined gypsum fluidized-bed furnace according to claim 1, wherein the automatic control logic further comprises: carrying out interlocking control on pressure of P4 to P7 and frequency of the Roots blower during air intake, such that the pressure is within a control range and a height of feed layer is guaranteed.

7. The control method for the energy-saving ultra-low pressure steam calcined gypsum fluidized-bed furnace according to claim 6, wherein the automatic control logic further comprises adjusting a regulating valve of an exhaust fan to maintain furnace top pressure P8 at a negative micro-pressure of -100 Pa, and a value of P8 is linked to frequency of the dust collecting fan.

8. The control method for the energy-saving ultra-low pressure steam calcined gypsum fluidized-bed furnace according to claim 1, wherein in the Step S4, feeding of material is paused when material temperature inside the furnace does not reach a specified temperature, and feeding of the material is resumed when the material temperature rises to the specified temperature.

FIG. 1

## INTERNATIONAL SEARCH REPORT

| International application No. |
|---|
| **PCT/CN2024/078787** |

### A. CLASSIFICATION OF SUBJECT MATTER

C04B11/032(2006.01)i

According to International Patent Classification (IPC) or to both national classification and IPC

### B. FIELDS SEARCHED

Minimum documentation searched (classification system followed by classification symbols)

IPC: C04B

Documentation searched other than minimum documentation to the extent that such documents are included in the fields searched

Electronic data base consulted during the international search (name of data base and, where practicable, search terms used)

CNTXT, CNABS, WPABS, ENTXT, VEN, CNKI, ELSEVIER: 石膏, 沸腾炉, 自动控制, 旁路, 过热蒸汽, gypsum, boiling furnace, automatic control, bypass, superheated steam

### C. DOCUMENTS CONSIDERED TO BE RELEVANT

| Category* | Citation of document, with indication, where appropriate, of the relevant passages | Relevant to claim No. |
|---|---|---|
| A | CN 215799198 U (CNBM DESIGN & RESEARCH INSTITUTE CO., LTD.) 11 February 2022 (2022-02-11)<br>description, paragraphs 14-15 | 1-8 |
| A | CN 113880470 A (TAI'AN LUFA ENERGY-SAVING AND ENVIRONMENTAL PROTECTION EQUIPMENT CO., LTD.) 04 January 2022 (2022-01-04)<br>entire document | 1-8 |
| A | CN 108863125 A (SHANDONG XIANLUO NEW BUILDING MATERIALS TECHNOLOGY DEVELOPMENT CO., LTD.) 23 November 2018 (2018-11-23)<br>entire document | 1-8 |
| A | CN 205721339 U (TIANWEI CHEMICAL CO., LTD. et al.) 23 November 2016 (2016-11-23)<br>entire document | 1-8 |
| A | CN 215592950 U (ZAOZHUANG SHENGSHI MACHINERY TECHNOLOGY CO., LTD.) 21 January 2022 (2022-01-21)<br>entire document | 1-8 |

☑ Further documents are listed in the continuation of Box C.       ☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **17 October 2024** | **25 October 2024** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT

| International application No. |
|---|
| **PCT/CN2024/078787** |

### C.    DOCUMENTS CONSIDERED TO BE RELEVANT

| Category* | Citation of document, with indication, where appropriate, of the relevant passages | Relevant to claim No. |
|---|---|---|
| A | JP H05163048 A (KUREHA CHEMICAL INDUSTRY CO., LTD. et al.) 29 June 1993 (1993-06-29) <br> entire document | 1-8 |

**INTERNATIONAL SEARCH REPORT**
Information on patent family members

International application No.

**PCT/CN2024/078787**

| Patent document cited in search report | | | Publication date (day/month/year) | Patent family member(s) | | | Publication date (day/month/year) |
|---|---|---|---|---|---|---|---|
| CN | 215799198 | U | 11 February 2022 | None | | | |
| CN | 113880470 | A | 04 January 2022 | None | | | |
| CN | 108863125 | A | 23 November 2018 | None | | | |
| CN | 205721339 | U | 23 November 2016 | None | | | |
| CN | 215592950 | U | 21 January 2022 | None | | | |
| JP | H05163048 | A | 29 June 1993 | JP | 3245436 | B2 | 15 January 2002 |

Form PCT/ISA/210 (patent family annex) (July 2022)